# EUROPEAN PATENT SPECIFICATION

(11) **EP 2 497 722 B1**
(45) Date of publication and mention of the grant of the patent: **20.12.2017**
(21) Application number: 11002132.6
(22) Date of filing: 15.03.2011
(51) Int. Cl.: B65D 85/04, B65H 75/22, G02B 6/44

(54) **Handling device for stubbed fiber optic hardware**
Handhabungsvorrichtung für vorterminierte faseroptische Hardware
Dispositif de manipulation pour matériel à bout en fibres optiques

(30) Priority: 09.03.2011 EP 11001924
(43) Date of publication of application: 12.09.2012
(73) Proprietor: CCS Technology Inc., Wilmington, DE 19803 (US)
(72) Inventor: Ruda, Michal, 93-377 Lodz (PL); Fabrykowski, Grzegorz, 95-010 Strykow (PL); Strunck, Sven, 13156 Berlin (DE)
(74) Representative: Sturm, Christoph

(56) References cited:
- EP-A1- 0 716 032
- EP-A1- 2 264 502
- CA-C- 2 047 652
- GB-A- 2 329 889
- US-A- 4 077 586
- US-A- 4 451 013
- US-A1- 2008 093 187
- US-B1- 7 546 019
- Diamond SA, specification sheet: "Diamond flexos Fiber Optic Passive Components FTTH Box", , February 2010 (2010-02), pages 1-1, XP002636489, Retrieved from the Internet: URL:www.diamond-fo.com/media/products/data sheets/FTTH_Box_e.pdf [retrieved on 2011-05-09]
- Superior Essex, Case study: "Fiber Reel-in-a-Box Cost Savings Analysis", , September 2010 (2010-09), pages 1-4, XP002636490, Retrieved from the Internet: URL:www.superioressex.com/uploadedfiles/Co mmunications_Cable/Docs/PDF/Case-Studies/C S-Fiber-Reel-in-a-Box.pdf [retrieved on 2011-05-09]
- Corning Cable Systems, Specification Sheet: "Preconnectorized "Stubbed" Hardware A LANscape Solutions Product", , June 2005 (2005-06), pages 1-5, XP002636491, Retrieved from the Internet: URL:www.hi-up.cn/en/US/pdfs/LAN657-En.pdf [retrieved on 2011-05-09]

## Description

The present patent application relates to a handling device for stubbed fiber optic hardware.

Stubbed fiber optic hardware has at least one fiber optic hardware component being connected to a fiber optic cable having a defined length. Stubbed fiber optic hardware is also often called preconnectorized fiber optic hardware which is equipped with factory-terminated and tested cable assemblies pre-installed into fiber optic hardware components. Stubbed fiber optic hardware takes the time-consuming and costly process of terminating fiber optic cables in the field and moves it to the factory.

For the time being the handling of such stubbed fiber optic hardware between the manufacturing of the same in the factory and the installation of the same in the field is problematic. For the time being it is difficult so ensure a safe transportation of the stubbed fiber optic hardware from the factory to the field and to allow an easy access to the same during installation in the field.

Known handling devices thereby comprise a cable spool with flanges between which a spooling drum extends, The spooling drum comprises an opening providing access to its interior. In this interior a hardware component attached to the cable can be stored during transport and taken out for installation (US20080093187, US4451013, CA2047652). Against this background, the problem to be solved is to provide a novel handling device for stubbed fiber optic hardware allowing a safe transportation of the stubbed fiber optic hardware from the factory to the field and an easy access to the same during installation in the field.

This problem is solved by a handling device for stubbed fiber optic hardware according to claim 1.

Preferred embodiments of the handling device are given in the dependent claims and the description below. Exemplary embodiments will be explained in more detail with reference to the drawing, in which:
- figure 1: shows a perspective view of an outer cover of a preferred embodiment of a handling device for stubbed fiber optic hardware;
- figure 2: shows a perspective view of an inner drum of a preferred embodiment of a handling device for stubbed fiber optic hardware;
- figure 3: shows the outer cover of figure 1 in a transport status;
- figure 4: shows the outer cover of figure 1 in a installation status;
- figure 5: shows a cross section through the handling device in a transport status of the inner drum part of figure 3;
- figure 6: shows a cross section through the handling device in a converting status between the transport status and the installation status of the inner drum part of figure 3;
- figure 7: shows a cross section through the handling device in a installation status of the inner drum part of figure 3;
- figure 8: shows details of the inner drum part in the installation status of the same; and
- figure 9: shows details of the inner drum part in the transport status of the same.

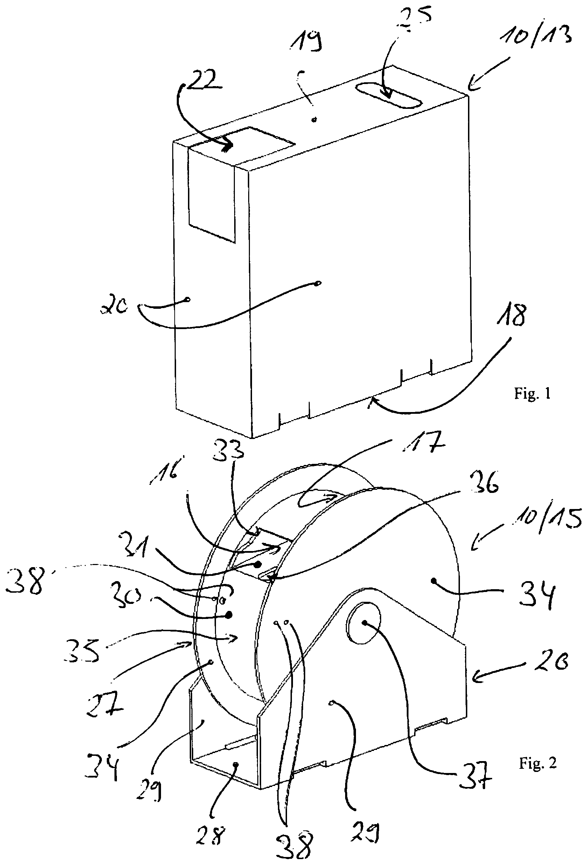

Figures 1 to 9 show details of a handling device 10 for stubbed fiber optic hardware. Stubbed fiber optic hardware has at least one fiber optic hardware component 11 being connected to a fiber optic cable 12 having a defined length.

Stubbed fiber optic hardware is also often called preconnectorized fiber optic hardware which is equipped with factory-terminated and tested fiber optic cable 12 assemblies pre-installed into fiber optic hardware components 11.

Stubbed fiber optic hardware takes the time-consuming and costly process of terminating fiber optic cables in the field and moves it to the factory.

The handling device 10 for stubbed fiber optic hardware comprises two main componets, namely an outer cover 13 defining a cavity 14; and an inner drum 15 positioned in said cavity 14 of said outer cover 13, whereby said inner drum 15 has a first, inner section 16 for handling the or each fiber optic hardware component 11 and a second, outer section 17 for handling the fiber optic cable 12.

The outer cover 13 has the shape of a parallelepiped block with a bottom wall 18, a top wall 19 and side walls 20 extending between the bottom wall 18 and top wall 19. Said walls 18, 19 and 20 define the cavity 14 of the cover 13 in which the drum 15 is positioned.

The outer cover 13 of the handling device 10 has at least one opening section 21 being removable from the cover 13 for providing an opening 22 through which the stubbed fiber optic hardware is removable from the inner drum 15 and from the cavity 14 of the outer cover 13. In the shown embodiment the opening section 21 extends over a portion of the top wall 19 of the outer cover 13 and over a portion of one adjacent side wall 20 of the outer cover 13. An opening 22 provided by such an opening section 21 extends around a corner of the outer cover 13 and allows a favourable access to the inner drum 15 positioned in said cavity 14 of said outer cover 13 and to the stubbed fiber optic hardware.

In one embodiment of the handling device 10 the opening section 21 being removable from the cover 13 for providing the opening 22 is designed as a knock out section which can be removed, for example burst forth, from the cover 13 along predetermined breaking points provided between the cover 13 and the respective knock out section.

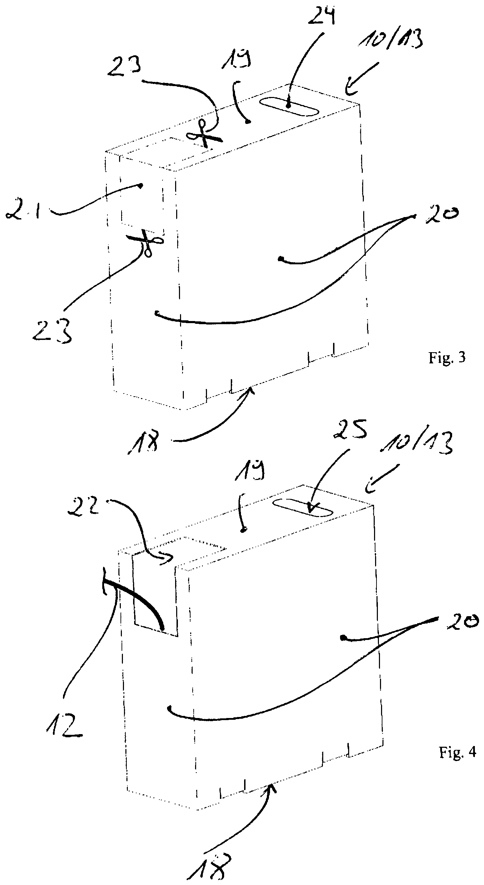

In another embodiment of the handling device 10 the opening section 21 being removable from the cover 13 for providing the opening 22 is designed as as a cut out section which can be cut out from the cover 13 by using a cutting device like a knife or scissors 23 (see figure 3).

After the opening section 21 is removed from the cover 13 the opening 22 allows access to the inner drum 15 and to the stubbed fiber optic hardware both being positioned in said cavity 14 of said outer cover 13.

As shown in figures 1, 3 and 4, in addition to the opening section 21 providing the opening 22 giving access to the inner drum, a further opening section 24 is provided in the top wall 19 of the cover.

Said additional opening section 24 being removable from the cover 13 provides an opening 25 which can be used as a carrying handle. The opening 25 providing the carrying handle is smaller than the opening 22, extends only over the top wall 19 of the cover 13 and does not provide access to the inner drum 15 and to the stubbed fiber optic hardware.

The additional opening section 24 can be designed as a knock out section or as a cut out section like the opening section 21.

The outer cover 13 is preferably made from a cardboard material.

However, the outer cover 13 can also be made from a plastic material or any other material which allows the removal of the opening sections 21 and 24.

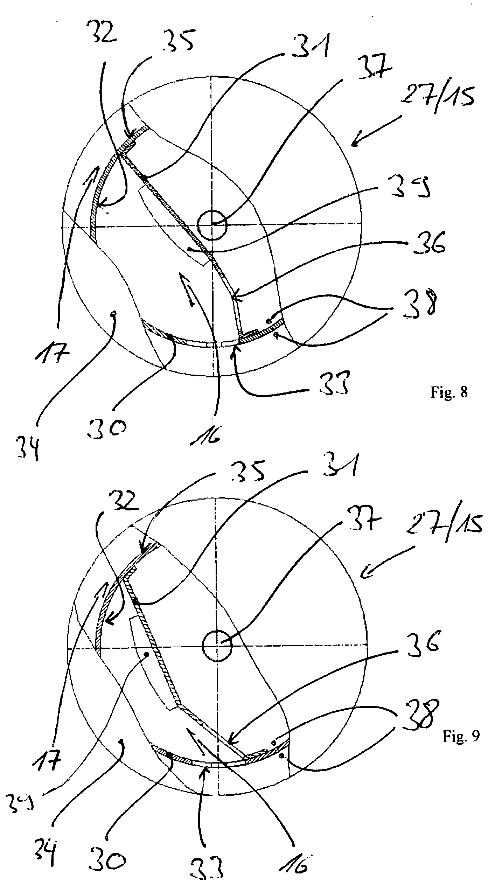

In the shown embodiment the inner drum 15 is designed as a self supported drum 15 having a non-rotating element 26 and a rotating element 27, whereby the non-rotating element 26 is attached to the bottom wall 18 of said outer cover 13, and whereby said non-rotating element 26 supports said rotating element 27. The non-rotating element 26 has a bottom section 28 through which the same is attached to the bottom wall 18 of said outer cover 13 and side sections 29 carrying and supporting the rotating element 27. Figures 8 and 9 each show only the rotating element 27 of the drum 15. Alternatively, the bottom section 28 of the non-rotating element 26 can provide the bottom wall 18 of said outer cover 13, whereby in this case the side walls 20 of the outer cover 13 are snapped onto the bottom section 28 of the non-rotating element 26.

As already mentioned above, the inner drum 15, namely the rotating element 27 of the same, has the first, inner section 16 for handling the or each fiber optic hardware component 11 and the second, outer section 17 for handling the fiber optic cable 11.

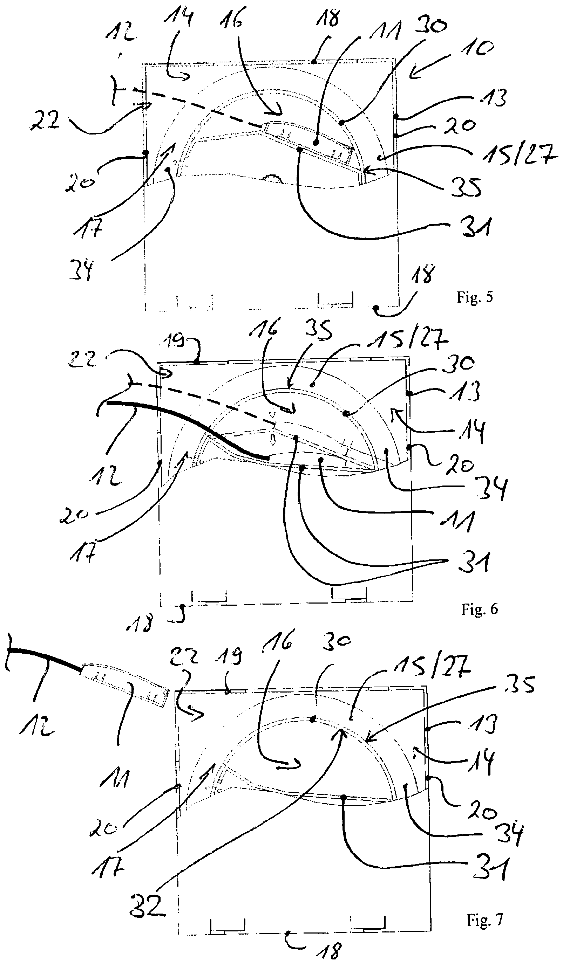

Said first, inner section 16 of said inner drum 15 for handling the or each fiber optic hardware component 11 is convertible between a transport status (see figures 5, 9) in which the or each fiber optic hardware component 11 is removable secured, preferably clamped, in the said first section 16 and an installation status (see figures 7, 8) in which the or each fiber optic hardware component 11 is released from the said first section 16 so that the or each fiber optic hardware component 11 can be removed from said first section 16. Figure 6 shows the transport status of the said first section 16 in dashed lines and the installation status of the same in solid lines.

In the transport status of the first section 16 of the rotating element 27 of the drum 15 the or each fiber optic hardware component 11 being positioned in said first section 16 is removably secured, preferably clamped, between a cylindrical wall 30 of the rotating element 27 and a flexible blocking element 31 of the rotating element 27. Said cylindrical wall 30, namely an inner surface 32 of the same, and the flexible blocking element 31 define together with an opening 33 in the cylindrical wall 30 said first, inner section 16 for handling the or each fiber optic hardware component 11.

Said cylindrical wall 30 of the rotating element 27 of the drum 15 is positioned between adjacent flanges 34 of the rotating element 27 of the drum 15, said adjacent flanges 34 having an outer diameter being larger than the outer diameter of said cylindrical wall 30, whereby the second, outer section 17 of said inner drum 15 for handling the fiber optic cable 12 is defined by an outer surface 35 of the cylindrical wall 30 and such sections of the flanges 34 extending radial outwardly from the cylindrical wall 30.

Openings 38 are provided in the flanges 34 and the cylindrical wall 30 for securing the cable 12 handled or stored in the second, outer section 17 of said inner drum 15. In the region of each flange 34 there are provided two of such openings, namely one opening radial outwardly with respect to the cylindrical wall 30 and one opening radial inwardly with respect to the cylindrical wall 30. Adjacent to the flanges and the openings of the same the cylindrical wall 30 comprises also such openings. Through said opening a cable binder can be fed for securing a cable 11 stored in the second, outer section 17 of said inner drum 15.

Opposite ends of said flexible blocking element 31 of the rotating element 27 of the drum 15 are attached to said inner surface 32 of said cylindrical wall 30, whereby the flexible blocking element 31 is not attached to the adjacent flanges 34 of said inner drum 15 thereby allowing a movement between the blocking element 31 and the adjacent flanges 34 when the first, inner section 16 of said inner drum 15 is converted between the transport status (see figures 5, 9) and the installation status (see figures 7, 8). The flexible blocking element 31 has an opening 36 for affecting the same in order to convert the first, inner section 16 between the transport status and the installation status. For transferring the inner section 16 from the transport status (see dotted lines in figures 6) into the installation status (see solid lines in figures 6) the flexible blocking element 31 is preferably pushed down. For transferring the inner section 16 from the installation status into the transport status the flexible blocking element 31 is preferably pulled up.

When the first section 16 is in the installation status, the or each fiber optic hardware component 11 can be removed from the inner section 16 through the opening 33 in the cylindrical wall 30.

The length of the flexible blocking element 31 is larger than the direct distance between the two points or areas of the inner surface 32 of the cylindrical wall 30 to which the opposite ends of said flexible blocking element 31 are attached. During conversion of the first, inner section 16 between the transport status and the installation status the cylindrical wall 30 becomes temporarily deformed.

As shown in figures 8 and 9 the flexible blocking element 31 can comprise opposite protrusions 39 defining together with flexible blocking element 31 an internal socket for placing the or each fiber optic hardware component 11.

The drum 15 is preferably made from a cardboard material.

However, the drum 15 can also be made from a plastic material or any other material which allows to convert the first, inner section 16 of said inner drum 15 between the transport status (see figures 5, 9) and the installation status (see figures 7, 8).

As shown in Figure 2, the rotating element 27 of the inner drum 15 is supported by the non-rotating element 26, whereby a rotating axis 37 of the rotating element 27 with respect to the non-rotating element 26 extends through the side sections 29 of the non-rotating element 26 and the flanges 34 of the rotating element 27.

The handling device 10 for stubbed fiber optic hardware allows a safe transportation of the stubbed fiber optic hardware from the factory to the field. The handling device 10 provides an easy access to the stubbed fiber optic hardware during installation of the same in the field. The handling device 10 supports different cable lengths and fulfils cable bending guidelines.

### List of reference numerals

- 10: handling device
- 11: fiber optic hardware component
- 12: fiber optic cable
- 13: outer cover
- 14: cavity
- 15: inner drum
- 16: first, inner section of inner drum
- 17: second, outer section of inner drum
- 18: bottom wall of outer cover
- 19: top wall of outer cover
- 20: side wall of outer cover
- 21: opening section
- 22: opening
- 23: knife / scissor
- 24: opening section
- 25: opening
- 26: non-rotating element of drum
- 27: rotating element of drum
- 28: bottom section of non-rotating drum element
- 29: side section of non-rotating drum element
- 30: cylindrical wall
- 31: flexible blocking element
- 32: inner surface
- 33: opening
- 34: flange
- 35: outer surface
- 36: opening
- 37: rotating axis
- 38: opening
- 39: protrusion

## Claims

1. A handling device (10) for stubbed fiber optic hardware, whereby stubbed fiber optic hardware has at least one fiber optic hardware component being connected to a fiber optic cable having a defined length, comprising:
an outer cover (13) defining a cavity (14); and
an inner drum (15) positioned in said cavity (14), whereby said drum (15) has a first, inner section (16) for handling the or each fiber optic hardware component and a second, outer section (17) for handling the fiber optic cable,
said first, inner section (16) of said inner drum (15) for handling the or each fiber optic hardware component is convertible between a transport status in which the or each fiber optic hardware component is removably secured in the said first section and an installation status in which the or each fiber optic hardware component is released from the said first section,
said inner drum (15) has a cylindrical wall (30) being positioned between adjacent flanges (34), said adjacent flanges (34) having an outer diameter being larger than the outer diameter of said cylindrical wall (30), whereby the second, outer section (17) of said inner drum (15) for handling the fiber optic cable is defined by an outer surface (35) of the cylindrical wall (30) and such sections of the flanges (34) extending radial outwardly from the cylindrical wall (30),
said first, inner section (16) of said inner drum (15) for handling the or each fiber optic hardware component is defined by an opening (33) in said cylindrical wall (30) and a flexible blocking element (31),
the handling device being **characterised in that** the flexible blocking element (31) is attached to an inner surface of said cylindrical wall (30), extends into the inner volume of the inner drum (15), and defines, together with the inner drum surface having the opening (33), said first, inner section (16), wherein the flexible blocking member (31) is movable from a first position defining the transport status of the first, inner section (16) to a second position defining the installation status of the first, inner section (16).

2. The handling device as claimed in claim 1, **characterised in that** opposite ends of said flexible blocking element (31) are attached to said inner surface (32) of said cylindrical wall (30), and that the flexible blocking element (31) is not attached to the adjacent flanges (34) of said inner drum (15) thereby allowing a relative movement between the blocking element (31) and the adjacent flanges (34) when the first, inner section (16) of said inner drum (15) is converted between the transport status and the installation status.

## Patentansprüche

1. Handhabungsvorrichtung (10) für eine vorterminierte faseroptische Hardware, wobei die vorterminierte faseroptische Hardware mindestens eine faseroptische Hardwarekomponente aufweist, die mit einem faseroptischen Kabel verbunden ist, das eine definierte Länge aufweist, umfassend:
eine äußere Abdeckung (13), die einen Hohlraum (14) begrenzt; und
eine innere Trommel (15), die in dem Hohlraum (14) positioniert ist, wobei die Trommel (15) einen ersten, inneren Abschnitt (16) zum Handhaben der oder jeder faseroptischen Hardwarekomponente und einen zweiten, äußeren Abschnitt (17) zum Handhaben des faseroptischen Kabels aufweist,
wobei der erste, innere Abschnitt (16) der inneren Trommel (15) zum Handhaben der oder jeder faseroptischen Hardwarekomponente zwischen einem Transportzustand, in dem die oder jede faseroptische Hardwarekomponente lösbar in dem zweiten Abschnitt gesichert ist, und einem Einbauzustand, in dem die oder jede faseroptische Hardwarekomponente aus dem ersten Abschnitt freigegeben ist, umsetzbar ist,
wobei die innere Trommel (15) eine zylindrische Wand (30) aufweist, die zwischen aneinander angrenzenden Flanschen (34) positioniert ist, wobei die aneinander angrenzenden Flansche (34) einen Außendurchmesser aufweisen, der größer ist als der Außendurchmesser der zylindrischen Wand (30), wobei der zweite, äußere Abschnitt (17) der inneren Trommel (15) zum Handhaben des faseroptischen Kabels von einer Außenfläche (35) der zylindrischen Wand (30) begrenzt ist und sich diese Abschnitte der Flansche (34) von der zylindrischen Wand (30) radial nach außen erstrecken,
wobei der erste, innere Abschnitt (16) der inneren Trommel (15) zum Handhaben der oder jeder faseroptischen Hardwarekomponente von einer Öffnung (33) in der zylindrischen Wand (30) und einem flexiblen Blockierungselement (31) begrenzt ist,
wobei die Handhabungsvorrichtung **dadurch gekennzeichnet ist, dass** das flexible Blockierungselement (31) an einer Innenfläche der zylindrischen Wand (30) angebracht ist, sich in das Innenvolumen der inneren Trommel (15) erstreckt und zusammen mit der Fläche der inneren Trommel, die die Öffnung (33) aufweist, den ersten, inneren Abschnitt (16) begrenzt, wobei das flexible Blockierungselement (31) aus einer ersten Position, die den Transportzustand des ersten, inneren Abschnitts (16) definiert, in eine zweite Position, die den Einbauzustand des ersten, inneren Abschnitts (16) definiert, bewegbar ist.

2. Handhabungsvorrichtung nach Anspruch 1, **dadurch gekennzeichnet, dass** einander gegenüberliegende Enden des flexiblen Blockierungselements (31) an der Innenfläche (32) der zylindrischen Wand (30) angebracht sind und dass das flexible Blockierungselement (31) nicht an den aneinander angrenzenden Flanschen (34) der inneren Trommel (15) angebracht ist, wodurch eine relative Bewegung zwischen dem Blockierungselement (31) und den aneinander angrenzenden Flanschen (34) ermöglicht wird, wenn der erste, innere Abschnitt (16) der inneren Trommel (15) zwischen dem Transportzustand und dem Einbauzustand umgesetzt wird.

## Revendications

1. Dispositif de manipulation (10) pour matériel à fibre optique précâblé, le matériel à fibre optique précâblé ayant au moins un composant de matériel à fibre optique qui est relié à un câble à fibre optique ayant une longueur définie, comprenant :
un capot extérieur (13) définissant une cavité (14) ; et
un tambour intérieur (15) positionné dans ladite cavité (14), ledit tambour (15) ayant une première section, intérieure (16) pour manipuler le ou chaque composant de matériel à fibre optique et une deuxième section, extérieure (17) pour manipuler le câble à fibre optique,
ladite première section, intérieure (16) dudit tambour intérieur (15) pour manipuler le ou chaque composant de matériel à fibre optique est convertible entre un état de transport dans lequel le ou chaque composant de matériel à fibre optique est fixé de façon amovible dans ladite première section et un état d'installation dans lequel le ou chaque composant de matériel à fibre optique est libéré de ladite première section,
ledit tambour intérieur (15) a une paroi cylindrique (30) qui est positionnée entre des flasques adjacents (34), lesdits flasques adjacents (34) ayant un diamètre extérieur qui est plus grand que le diamètre extérieur de ladite paroi cylindrique (30), la deuxième section, extérieure (17) dudit tambour intérieur (15) pour manipuler le câble à fibre optique étant définie par une surface extérieure (35) de la paroi cylindrique (30) et les sections des flasques (34) s'étendant radialement vers l'extérieur depuis la paroi cylindrique (30),
ladite première section, intérieure (16) dudit tambour intérieur (15) pour manipuler le ou chaque composant de matériel à fibre optique est définie par une ouverture (33) dans ladite paroi cylindrique (30) et un élément de blocage souple (31),
le dispositif de manipulation étant **caractérisé en ce que** l'élément de blocage souple (31) est attaché à une surface intérieure de ladite paroi cylindrique (30), s'étend dans le volume intérieur du tambour intérieur (15), et définit, conjointement avec la surface intérieure du tambour ayant l'ouverture (33), ladite première section, intérieure (16), l'élément de blocage souple (31) étant mobile depuis une première position définissant l'état de transport de la première section, intérieure (16) jusqu'à une deuxième position définissant l'état d'installation de la première section, intérieure (16).

2. Dispositif de manipulation selon la revendication 1, **caractérisé en ce que** des extrémités opposées dudit élément de blocage souple (31) sont attachées à ladite surface intérieure (32) de ladite paroi cylindrique (30), et **en ce que** l'élément de blocage souple (31) n'est pas attaché aux flasques adjacents (34) dudit tambour intérieur (15), permettant ainsi un mouvement relatif entre l'élément de blocage (31) et les flasques adjacents (34) quand la première section, intérieure (16) dudit tambour intérieur (15) est convertie entre l'état de transport et l'état d'installation.
